# EUROPÄISCHE PATENTSCHRIFT

(11) **EP 0 991 934 B1**
(45) Veröffentlichungstag und Bekanntmachung des Hinweises auf die Patenterteilung: **10.03.2004**
(21) Anmeldenummer: 98937407.9
(22) Anmeldetag: 24.06.1998
(51) Int. Cl.: G01N 21/88, G02B 7/28

(54) **VERFAHREN ZUR FOKUSSIERUNG BEI DER ABBILDUNG STRUKTURIERTER OBERFLÄCHEN VON SCHEIBENFÖRMIGEN OBJEKTEN**
METHOD FOR FOCUSING DURING IMAGING OF STRUCTURED SURFACES OF DISC-SHAPED OBJECTS
PROCEDE DE FOCALISATION LORS DE LA REPRESENTATION DE SURFACES STRUCTUREES D'OBJETS SOUS FORME DE PLAQUES

(30) Priorität: 24.06.1997 DE 19726696
(43) Veröffentlichungstag der Anmeldung: 12.04.2000
(73) Patentinhaber: Leica Microsystems Wetzlar GmbH, 35578 Wetzlar (DE)
(72) Erfinder: GRÄF, Michael, D-07747 Jena (DE); GRAF, Uwe, D-07747 Jena (DE); WIENECKE, Joachim, D-07747 Jena (DE); HOFFMANN, Günter, D-07743 Jena (DE); FRANKE, Karl-Heinz, D-98693 Ilmenau (DE); JAKOB, Lutz, D-07743 Jena (DE)
(74) Vertreter: Reichert, Werner F., Dr.
(86) Internationale Anmeldenummer: PCT/DE1998/001726
(87) Internationale Veröffentlichungsnummer: WO 1998/059235

(56) Entgegenhaltungen:
- WO-A-95/19552
- DE-A- 3 735 091
- US-A- 4 203 031
- PATENT ABSTRACTS OF JAPAN vol. 016, no. 417 (E-1258), 3. September 1992 & JP 04 142055 A (NEC YAMAGATA LTD), 15. Mai 1992

## Beschreibung

Die Erfindung betrifft ein Verfahren zur Fokussierung bei der Abbildung von unstrukturierten und strukturierten Oberflächen von scheibenförmigen Objekten für die Anwendungen der Defekterkennung und Defektklassifikation durch geregelte Verstellung des meßbaren Abstandes einer zur Auflage für die Objekte dienenden Trägerebene zu einer Bezugsebene.
Das Verfahren ist vorwiegend anwendbar in der Prozeßkontrolle von Halbleiterwafern im Herstellungsprozeß.

Aufgabe einer Inspektion bei der Herstellung integrierter Schaltkreise ist es, sowohl unstrukturierte als auch strukturierte Halbleiterwafer bildfeldweise abzutasten, vorhandene Defekte zu detektieren und diese schließlich durch Klassifikation Fehlergruppen zuzuordnen.

Die DE 37 35 091 A1 offenbart ein automatisches Fokussierverfahren, mit dem der maximale Kontrast beim schrittweisen Durchfahren des Objektabstandes festgestellt wird. Damit ist die gesuchte Fokusposition erreicht und der Fokussiervorgang beendet. Mit dieser Methode können Nebenmaxima in der Kontrastkurve erkannt und nicht mit dem Hauptmaximum verwechselt werden.

In der WO 95/19552 wird ein automatisches Fokussierverfahren für ein konfokales Lasermikroskop beschrieben, bei dem ein Laserstrahl auf eine Objektoberfläche gerichtet wird und beim Durchfahren des Objektabstandes die maximale Lichtintensität des reflektierten Lichtes festgestellt wird. Damit ist die gesuchte Fokusposition erreicht und der Fokussiervorgang beendet. Zudem kann von dieser Fokusposition aus durch Anwendung eines definierten Offsets eine Scharfeinstellung auf eine unterhalb der Oberfläche liegende Schicht erreicht werden. Dadurch ist die Scharfeinstellung auf die tiefergelegene Schicht von deren Reflektivität unabhängig.

Nach der DE 44 10 603 C1 ist ein Verfahren bekannt, das der Erkennung von Fehlern spezifische Bildpunktmerkmale eines von der Oberfläche des Halbleiterwafers aufgenommenen Bildes zugrundelegt. Eine derartige direkte Fehlerdetektion auf der Grundlage natürlicher Unterscheidungsmerkmale zwischen Untergrund und Defekt und der typischen Eigenschaften verschiedener Defektarten kommt im Gegensatz zum Soll-Ist-Vergleich weitgehend ohne umfangreiche Informationen zur Sollstruktur aus, da sie von bestimmten Grundregeln bzw. Regelabweichungen bei der Bilderkennung ausgeht. Solche Regeln bzw. Regelabweichungen sind im wesentlichen durch Farb- und Formmerkmale der Sollstruktur oder der Sollschicht bzw. des Fehlers gegeben.

Charakteristisch für das Verfahren ist, daß ein durch Bildpunktklassifikation erzeugtes Zwischenbild Bildpunktmerkmale als in Grauwerte umgewandelte Zugehörigkeitswahrscheinlichkeiten zu Gebieten, die durch Anlernen bekannt gemacht sind, enthält, einschließlich der Grauwertstufungen von Übergängen zwischen aneinander angrenzenden Gebieten.

Für die Auswertung der Bildinhalte nach der Grundidee der Prozeß- und Qualitätskontrolle ist es von besonderem Interesse, wie und in welcher Qualität die Strukturen und Fehler als dreidimensionale Gebilde mit Hilfe von Optiken abgebildet werden.

Da im Bild dargestellte Strukturen und Fehler der Oberfläche des Halbleiterwafers ihr tatsächliches Aussehen in Abhängigkeit vom Fokuszustand verändern, ist dessen Einstellung von außerordentlicher Bedeutung.
Bekannte optische Verfahren zur Bewertung eines Fokuszustandes (DE 32 19 503 C2) besitzen den Nachteil, große Reflexionsgradschwankungen über kleinere und größere Bereiche des Halbleiterwafers und weitere Einflußfaktoren, wie z. B. Keilfehler, Rauigkeit, Welligkeit sowie Strukturhöhenschwankungen im Bildfeld, die zum Teil größer sind als die Schärfentiefe, nicht zufriedenstellend zu bewältigen. So simulieren Reflexionsgradschwankungen im Ergebnis der Bewertung nicht vorhandene Höhenschwankungen oder Tischablauffehler, die es auszuregeln gilt.

Bei der nach dem Verfahren gemäß der DE 44 10 603 C1 durchzuführenden Bildpunktklassifikation in Form einer Farbklassifikation, die davon ausgeht, daß sich die zu ungestörten Strukturkomponenten gehörenden, durch Stichprobenanalyse schätzbaren Farbvalenzen in ihrer Statistik durch ellipsoide Cluster im Farbraum beschreiben lassen und fehlerverdächtige Bildpunkte außerhalb der Cluster liegende Fehlercluster liefern, ist eine Trennung der Fehlercluster von den Clustern der ungestörten Strukturen erheblich gestört.
Die Folge ist eine Erhöhung der Pseudofehlerrate sowie eine Verringerung der Erkennungssicherheit. Pseudofehler sind Erscheinungen in der Ergebnisdarstellung der Inspektion, die auf Grund ihrer Eigenschaften vom Inspektionssystem als Fehler erkannt werden, obwohl sie keine sind.

Die Aufgabe der Erfindung besteht darin, ein Verfahren zur Fokussierung auf unstrukturierten und strukturierten Oberflächen von scheibenförmigen Objekten anzugeben, so daß bei einer Bildverarbeitung der abgebildeten Oberflächen eine Erhöhung der Erkennungssicherheit von Fehlern und eine Senkung der Pseudofehlerrate erreicht wird.

Die Aufgabe wird dadurch gelöst, daß der durch geregelte Verstellung hergestellte Abstand mit Hilfe eines der Regelung überlagerten, ungeregelten, mindestens für ein Teilgebiet der Oberfläche anzuwendenden und vorher für das Teilgebiet angelernten Voreinstellwertes korrigiert ist.

Die Ermittlung des für ein Teilgebiet gültigen Voreinstellwertes erfolgt anhand einer Bildfolge an mindestens einer Position in einem, im wesentlichen ebenen Referenzgebiet der Oberfläche, zu deren Aufnahme unterschiedliche Voreinstellwerte der Fokusregelung dienen, wobei die Qualität des Fokuszustandes mittels Bildverarbeitung nach mindestens einer Regel bewertet wird.

In einer ersten Variante dient der zum kontrastreichsten, durch Bildverarbeitung bestimmten Bild gehörige Voreinstellwert zur Einstellung des korrigierten Abstandes.

In einer zweiten Variante dient der zum Bild mit minimaler Anzahl der Fehler gehörige Voreinstellwert zur Einstellung des korrigierten Abstandes.

In einer dritten Variante dient der zum Bild mit minimaler Anzahl der Fehlerpixel im Verhältnis zur Gesamtfehlerfläche gehörige Voreinstellwert zur Einstellung des korrigierten Abstandes.

Schließlich dient in einer vierten Variante der zum Bild mit minimaler Anzahl der Pseudofehlerpixel gehörige Voreinstellwert zur Einstellung des korrigierten Abstandes.

Eine Auswahl des Referenzgebietes erfolgt nach dem geringsten Gradienten des Höhenprofils der Oberfläche, zu dessen Bestimmung die Werte des Abstandes der Trägerebene zur Bezugsebene an Orten sich wiederholender Höhenmarken für den Voreinstellwert der Fokusregelung zu ermitteln sind, bei dem mindestens eine Regel erfüllt ist.

Bei der Inspektion in Form einer bildfeldweisen Fehlersuche wird zur Fokussierung der für die Bildfeldposition ermittelte Voreinstellwert der Fokusregelung verwendet.

Zur Defektklassifikation, bei der ein Bild, das einen zu klassifizierenden Fehler enthält mit einem Referenzbild verglichen wird, erfolgt die Aufnahme des Referenzbildes mit dem für die Referenzbildposition ermittelten korrigierten Abstand der Trägerebene zur Bezugsebene.
Zur Aufnahme des Bildes mit dem zu klassifizierenden Fehler wird der Wert des Abstandes der Trägerebene zur Bezugsebene für die Fokuseinstellung verwendet, der zum kontrastreichsten Bild einer Serie von Bildern mit dem zu klassifizierenden Fehler gehört, für die der für die zugehörige Bildposition ermittelte Voreinstellwert der Fokusregelung in Stufen varriert wird.

Durch die Erfindung wird der Fokuseinstellung somit mindestens ein Voreinstellwert zugrundegelegt, dessen Bestimmung durch Anlernen anhand von Referenzgebieten und auf das Ergebnis gerichteten Regeln erfolgt.

Durch eine adaptive Regelung wird erreicht, daß vor allem spezifische Eigenschaften des Objektes bei der Fokussierung zum Zwecke der Fehlererkennung und -klassifizierung berücksichtigt werden. Außerdem werden störend auf die Fokussierung wirkende gerätetechnische Einflüsse eliminiert.

Die Erfindung soll nachstehend anhand der schematischen Zeichnung näher erläutert werden. Es zeigen:
- Fig. 1: eine Einrichtung zur Fokussierung bei der Abbildung strukturierter Oberflächen
- Fig. 2a - 2c: Binärbilder von Bildfeldern eines Fehlergebietes, die mit verschiedenen Fokuseinstellungen aufgenommen sind
- Fig. 3: die Bildverarbeitungseinheit und Kameraansteuerung in einem Blockschaltbild
- Fig. 4a - 4c: Binärbilder von Bildfeldern eines Fehlergebietes, die mit verschiedenen Fokuseinstellungen aufgenommen sind zur Ermittlung der Anzahl der Pseudofehlerpixel

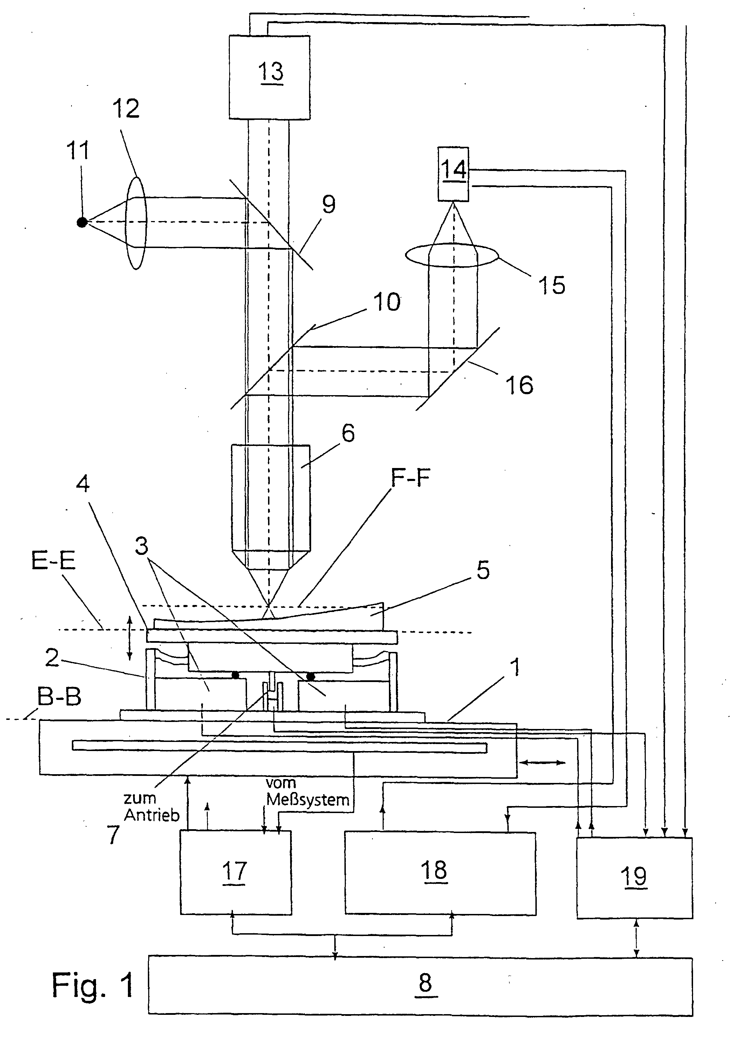

Bei der in Fig. 1 dargestellten Einrichtung zur Fokussierung bei der Abbildung strukturierter Oberflächen trägt ein als x-y-Tisch ausgelegter Wafertisch1, von dem nur der in x-Richtung verstellbare Teil dargestellt ist, ein Fokusstellsystem 2. Mittels Piezoelemente 3 ist ein Träger 4 zur Aufnahme eines scheibenförmigen Objektes 5, wie z. B. eines Wafers in vertikaler Richtung zu Fokussierzwecken gegenüber der Fokusebene F-F eines Mikroskopobjektivs 6 verstellbar.

Die relative Verstellung der Trägerebene E-E gegenüber der Fokusebene F-F ist mit einem induktiven Meßsystem 7 ermittelbar, indem der Abstand zu der als Bezugsebene B-B dienenden Tischoberfläche gemessen wird.

Das induktive Meßsystem 7 ist als Feinzeigerregelung auch dazu geeignet, die Höhenposition der Trägerebene E-E als Sollwert einzuregeln, wobei der Sollwert durch eine Gerätesteuerung und - regelung 8 bei dem noch zu beschreibenden erfindungsgemäßen Fokussierverfahren vorgegeben wird.

In den Strahlengang des Mikroskopobjektivs 6 sind mittels teildurchlässiger Umlenkspiegel 9, 10 eine Lichtquelle 11 über eine Beleuchtungsoptik 12, ein Fokusmeßsystem 13 und ein CCD-Meßsystem 14 eingekoppelt. Letzteres vefügt in seinem Strahlengang zusätzlich über ein abbildendes Tubussystem 15 und einen Umlenkspiegel 16.

Mit der zentralen Gerätesteuerung und -regelung 8 sind eine Tischansteuerung 17, eine Bildverarbeitung und Kameraansteuerung 18 und eine Fokusregelung 19 verbunden.

Nicht dargestellte x- und y-Meßsysteme sind an die Eingänge der Tischansteuerung 17 angeschlossen. Die Ausgänge der Tischansteuerung 17 führen zu ebenfalls nicht dargestellten x- bzw. y-Antrieben für den Wafertisch 1.

Ein- und Ausgänge der Bildverarbeitung und Kameraansteuerung 18 sind mit dem CCD-Meßsystem 14 verbunden.

Während an die Eingänge der Fokusregelung 19 das Fokusmeßsystem 13 und das induktive Meßsystem 7 geführt sind, ist das Fokusstellsystem 2 mit den Ausgängen gekoppelt.

Durch die Gerätesteuerung und -regelung 8 wird ein zur Waferinspektion gehörendes Fahr- und Betriebsregime vorgegeben.

Über die Tischansteuerung 17 und die x- bzw. y-Antriebe wird der Wafertisch 1 im Schrittbetrieb in die erforderlichen Positionen gefahren, wobei die x- und y-Meßsysteme das Erreichen der beabsichtigten Position signalisieren. Das Mikroskopobjektiv 6 und das Tubussystem 15 bilden die Waferoberfläche auf das CCD-Meßsystem 14 ab. Über die Bildverarbeitungseinheit und Kameraansteuerung 18 erfolgt eine Bildaufnahme.

Zur Herstellung eines Fokuszustandes, der auswertbare Bilder garantiert, dient ein Fokussiersystem, das aus dem Fokusmeßsystem 13, dem Fokusstellsystem 2 und der Fokusregelung 19 besteht.

Die als LED ausgebildete Lichtquelle 11 strahlt im nahen Infrarotbereich, bei ca. 870 nm zur sauberen Trennung vom "Meßlicht" der Defektkontrolle (nicht dargestellt). Außerdem wird die LED zur Vermeidung von Fremdlichteinflüssen mit ca. 3,3 kHz getaktet.

Das Fokussiersystem arbeitet nach einem Meßprinzip, bei dem ein Testobjektbild durch das Mikroskopobjektiv 6 auf die zu fokussierende Oberfläche abgebildet wird. Intensitätsdifferenzen, die durch eine im allgemeinen versetzte telezentrische Rückabbildung gegenüber einem identischen Referenztestobjekt entstehen, werden in zwei getrennten Kanälen durch zwei Fotodioden erfaßt und anschließend ausgewertet. Der fokussierte Zustand ist erreicht, wenn die Intensitätsdifferenz Null ist.

Damit dieser Zustand erreicht wird, werden die den Intensitäten entsprechenden Fotodiodenstöme in Spannungssignale gewandelt, verstärkt der Fokusregelung 19 zugeführt und digitalisiert. Ein Regelalgorithmus berechnet einen auszugebenden Hochspannungsstellwert, der als Analogsignal dem Fokusstellsystem 2 zur Vertikalverstellung des Trägers 4 übergeben wird.

Entscheidend für eine variable Nutzung des Fokussiersystems ist die Maßnahme, der gemessenen Intensitätsdifferenz additiv einen in bestimmter Art und Weise festgelegten Digitalwert in Form eines Offsets oder Voreinstellwertes zu überlagern.

Damit der Regelalgorithmus trotzdem als Null-Regelung arbeitet, muß der Träger 4 mit dem Objekt 5 soweit vertikal verstellt werden, daß die mit dem Fokusmeßsystem 13 gemessene und digitalisierte Intensitätsdifferenz gerade genauso groß ist wie der definierte Offset, jedoch mit entgegengesetztem Vorzeichen.

Gemäß der Erfindung kann somit über den Offset einerseits die Anpassung der Regelungsebene an die tatsächliche Fokusebene F-F erfolgen, andererseits können gezielte Ablagen von dieser Ebene eingestellt werden.

Wesentlich ist, daß die über den Offset eingestellte z-Position des Objektes 5 weiterhin eine geregelte Position ist, indem Wafertopologien weiterhin ausgeregelt werden. Im wesentlichen erfolgt eine Parallelverschiebung der realen Objektoberfläche.

Ein bestimmter Wert des Offsets kann somit, abhängig von der Position des x-y-Tisches, unterschiedliche Werte des induktiven Meßsystems 7 zur Folge haben, weil diesem die Tischoberfläche als Bezugsebene B-B dient.

Das Fokussiersystem arbeitet auch beim Verfahren des Objektes 5 von einer Position zur nächsten. Es werden Meßsignale in hoher Folge (mindestens 40 ms) generiert, auf die die Fokusregelung 19 und das Fokusstellsystem 2 ständig reagieren.

Von besonderer Bedeutung für die vorliegende Erfindung ist die Verwendung des CCD-Meßsystems 14 in Verbindung mit der Bildverarbeitung und Kameraansteuerung 18 zur Feststellung des mit dem Fokussiersystem eingestellten Fokussierzustandes, indem mit Hilfe einer Kontrastfunktion eines an sich bekannten Kontrastprogramms aus einer Bildfolge das kontrastreichste und damit schärfste Bild errechnet wird.

Einer für die Durchführung des erfindungsgemäßen Verfahrens wesentlichen Anpassung der Fokussierung dient eine Arbeitsweise, nach der Voreinstellwerte für die Fokusregelung bestimmt werden, bei denen die Pseudofehlerrate gemäß der Aufgabenstellung minimiert ist. Es werden Regeln angewendet, denen die Auswirkungen verschieden starker Defokussierungen zugrundegelegt sind.

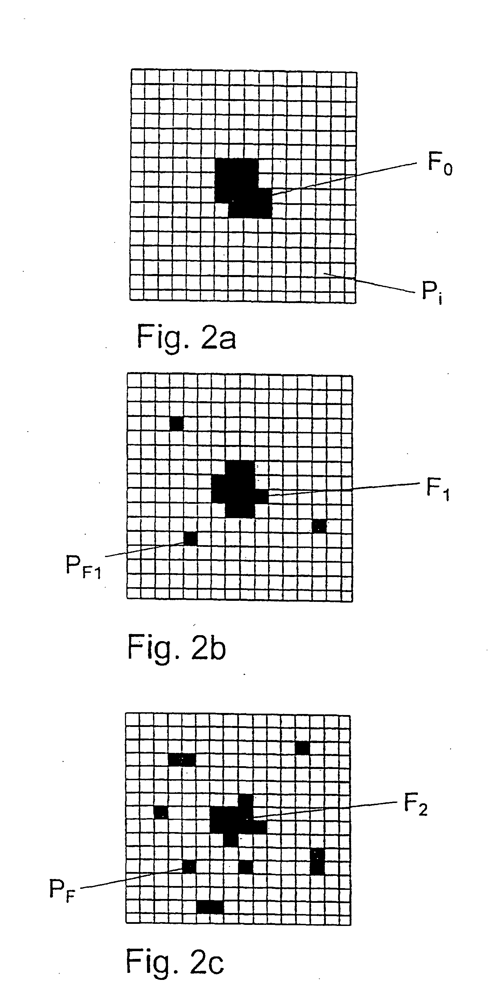

Optimale Fokussierung, Fig. 2a, bei einer Fokuslage fₙ₀ bedeutet, daß Fehler optimal detektiert werden.

Im dargestellten Bildfeld, das sich in einzelne Pixel Pᵢ unterteilt, ist ein Fehler F₀ (Anzahl n₀) mit einer Gesamtfehlerfläche A₀ vorhanden. Pseudofehler P_{F0} sind im vorliegenden Idealfall nicht vorhanden.

Bei einer geringen Defokussierung fₙ₁, Fig. 2b, steigt die Fehleranzahl auf n₁ > n₀ im Vergleich zu Fig. 2a durch das Auftreten erster Pseudofehler P_{F1}. Der tatsächliche Fehler F₁ wird kleiner, die Gesamtfehlerfläche A₁ > A₀ wächst aber wegen der höheren Anzahl der Pseudofehler. Die Anzahl der Fehlerpixel P₁ > P₀ steigt.

Bei einer starken Defokussierung fₙ₂, Fig. 2c, steigen Anzahl und Größe der Pseudofehler P_{F2} und damit die Gesamtfehlerfläche A₂ > A₁ deutlich an.

Die Fehleranzahl steigt auf n₂ > n₁, die Anzahl der Fehlerpixel auf P₂ > P₁.

Zur Regelanwendung wird in Ruhestellung des x-y-Tisches eine Bildserie von "n" Bildern mit jeweils um einen Wert "m" modifizierten Voreinstellwerten für die Fokusregelung von der Waferoberfläche eingezogen, binarisiert, abgespeichert und mit entsprechenden Bildverarbeitungsalgorithmen bearbeitet. Das Binärbild beinhaltet den entsprechenden Defekt und die Pseudodefekte. Diese Bilder der Bildserie werden zur Ermittlung des Optimalfokus und damit des optimalen Voreinstellwertes verwendet.

Das ausgewählte Bild wird zur Detektion und Klassifizierung des Defektes verwendet.

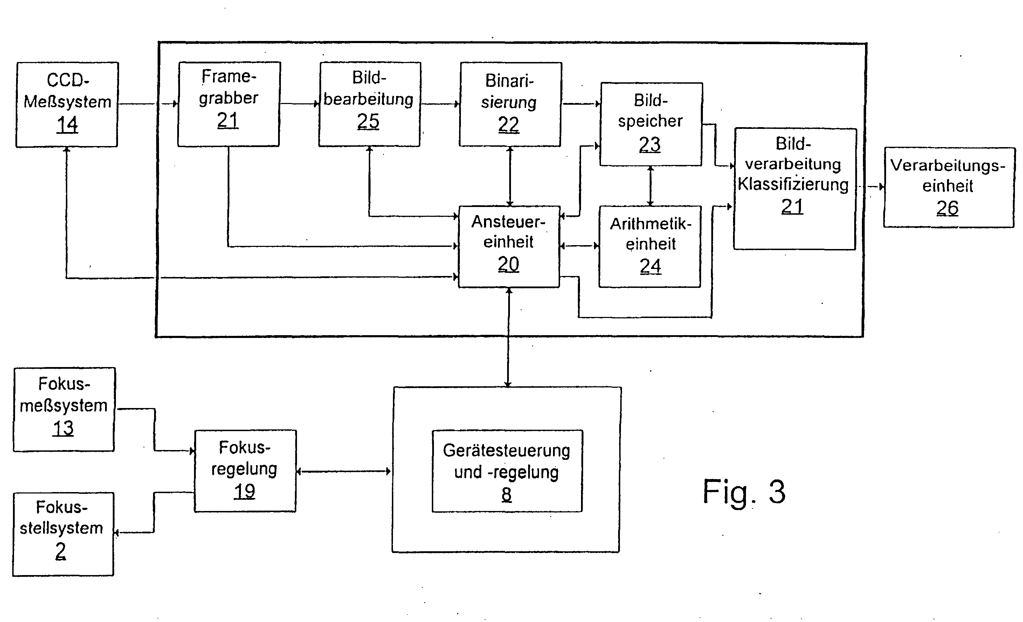

Der Verfahrensdurchführung dieser Verfahrensweise dient ein Aufbau für die Bildverarbeitung und Kameraansteuerung 18 gemäß Fig. 3.

In analoger Weise zu Fig. 1 ist die Bildverarbeitung und Kameraansteuerung 18 ein- und ausgangsseitig mit der Gerätesteuerung und -regelung 8 verbunden, von der außerdem eine ein- und ausgangsseitige Verbindung zur Fokusregelung 19 besteht. In die Fokusregelung 19 werden Daten des Fokusmeßsystems 13 eingespeist, durch die das Fokusstellsystem 2 regelbar angesteuert werden kann.

In der Bildverarbeitung und Kameraansteuerung 18 ist eine Ansteuereinheit 20 ein- und ausgangsseitig mit dem CCD-Meßsystem 14, einem Framegrabber 21, einer Binarisierung 22, einem Bildspeicher 23 und einer Arithmetikeinheit 24 verbunden. Mit einem weiteren Ausgang ist die Ansteuereinheit 20 an eine Einheit zur Bildverarbeitung und Klassifizierung 21 gekoppelt, die ebenfalls einen Zugriff auf den Bildspeicher 23 besitzt. Eine Verbindungskette ist außerdem vom CCD-Meßsystem 14 über den Framegrabber 21 und die Binarisierung 22 zum Bildspeicher 23 hergestellt.

Vorteilhaft ist es, zwischen dem Framegrabber 21 und der Binarisierung 22 weitere Komponenten zur Bildbearbeitung 25 anzuordnen, die der Bildverbesserung, der Rauschunterdrückung und der Defekterkennung dienen.

Nach einer ersten, von den zur Anwendung kommenden Regeln soll die Anzahl der Fehler im Bildfeld zu einem Minimum werden.

In der Arithmetikeinheit 24 erfolgt eine Überprüfung durch Zählen der Fehler in einer für den Fachmann geläufigen Weise in jedem der im Bildspeicher 23 abgespeicherten Binärbilder. Mit jedem erkannten Fehler wird der Zähler z.B. um eine Einheit weitergesetzt. Das Bild mit minimaler Anzahl der Fehler wird ausgewählt.

Die Ansteuereinheit 20 bewirkt eine Übergabe dieses Bildes an die Bildverarbeitung/Klassifizierung 21, in der eine Klassifizierung der im Bildfeld vorhandenen Defekte nach bekannten Regeln entsprechend ihrer Farbe, Struktur und Form mit Hilfe eines Klassifikators erfolgt.

Die klassifizierten Defekte werden in einer Verarbeitungseinheit 26 zusammengefaßt, abgespeichert und stehen nach Beendigung der Inspektion zur Anzeige zur Verfügung.

Nach einer zweiten Regel soll die Anzahl der Fehlerpixel im Verhältnis zur Gesamtfehlerfläche zu einem Minimum werden.

In jedem abgespeicherten Binärbild werden die Fehlerpixel im Verhältnis zur Gesamtfehlerfläche gezählt. Das Bild mit den wenigsten Fehlerpixeln wird ausgewählt und der Bildverarbeitung/Klassifizierung zugeführt.

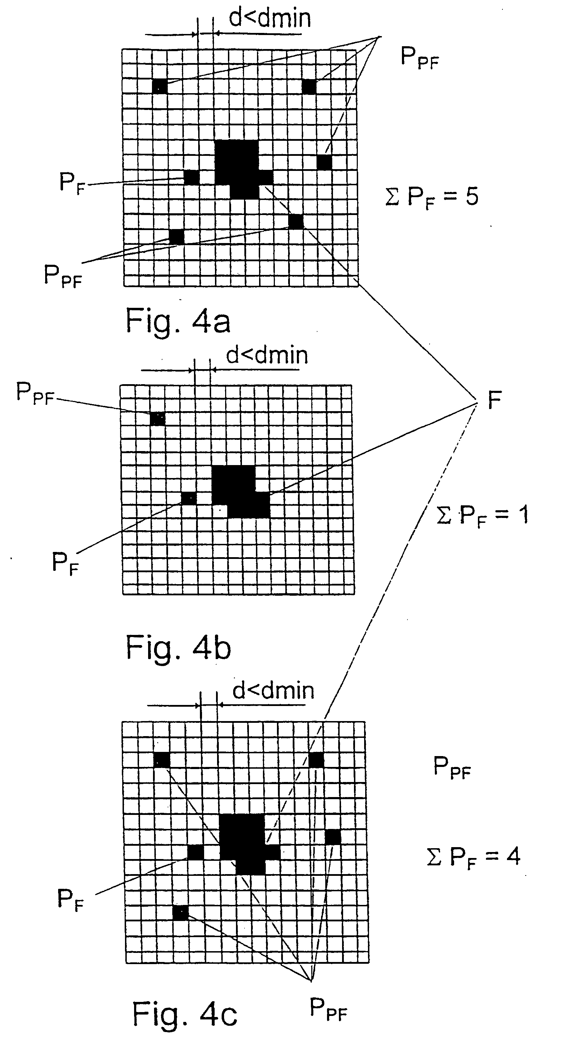

Nach einer dritten Regel, die in den Figuren 4a - 4c verdeutlicht wird, soll die Anzahl der Pseudofehlerpixel zu einem Minimum werden.

Pseudofehlerpixel P_{PF} sind Fehlerpixel, die nicht dem eigentlichen Fehler F zuzuordnen sind, wobei der Fehler F die zahlenmäßig größte zusammenhängende Anhäufung von Fehlerpixeln darstellt.

Es werden auch solche Fehlerpixel P_{F}, die einen Mindestabstand dₘᵢₙ zum Fehler unterschreiten, diesem zugerechnet.

Die unter dieser Voraussetzung übrigbleibenden Pseudofehlerpixel P_{PF} werden gezählt.

Im vorliegenden Beispiel gemäß der Figuren 4a - 4c, bei dem ein Abstand d zum Fehler F von einer Pixelbreite kleiner ist als der Mindestabstand dₘᵢₙ, ergeben sich in Fig. 4a fünf, in Fig. 4b ein und in Fig. 4c vier Pseudofehlerpixel P_{PF}.

Das Binärbild, das die wenigsten Pseudofehlerpixel P_{PF} (Fig. 4b) aufweist, wird ausgewählt und zur Bildverarbeitung/Klassifizierung verwendet.

Schließlich soll nach einer vierten Regel der Fehler mit höchstem Kontrast abgebildet werden.

Die mit dem CCD-Meßsystem 14 über den Framegrabber 21 aufgenommenen Bilder werden in der Bildbearbeitungseinheit 25 bearbeitet und einem Kontrastmaximierungsverfahren unterzogen.

Ein Kontrastmaximierungsverfahren beruht darauf, daß das Bildfeld in Fenster von z. B. 3x3 Pixel aufgeteilt wird. In jedem dieser Fenster wird der Grauwert des Zentralpixels in den digitalen Stufen 0 bis 255 ermittelt und die Differenz zu den Grauwerten seiner Nachbarpixel berechnet. Aus diesen Differenzen wird ein Mittelwert gebildet. Die so für jedes Fenster ermittelte Grauwertdifferenz wird über das gesamte Bildfeld summiert. Das Ergebnis wird mit dem Bildfeld abgespeichert.

Das Verfahren wird für jede der vorgegebenen Fokuseinstellungen wiederholt.

Das kontrastreichste Bildfeld ist dasjenige mit der maximalen Grauwertdifferenz und wird zur Bildverarbeitung/Klassifizierung verwendet.

Für die Ausführungsbeispiele zur Fokussierung bei der Inspektion und bei der Defektklassifikation wird vorwiegend von der vierten Regel Gebrauch gemacht, was jedoch keine Einschränkung der Anwendbarkeit der übrigen Regeln bedeutet.

Zur Durchführung des erfindungsgemäßen Verfahrens müssen sowohl für die Inspektion als auch die Defektklassifikation zunächst Grundeinstellwerte für die Fokusregelung gefunden werden, die einerseits gerätetechnische Einflüsse kompensieren andererseits den Suchbereich für einen, auf ein Teilgebiet der Oberflächen bezogenen Einstellwert der Fokussierung einengen. So ist z. B. eine Angleichung des im Infarotbereich arbeitenden optischen Fokusmeßsystems 13 an das CCD-Meßsystems 14, das mit sichtbarem Licht arbeitet, erforderlich. Andere störende Einflüsse sind Driften und Optiktoleranzen.

Von einer gerätefesten Teststruktur in Form eines Schachbrettmusters wird aus einer Bildfolge mit unterschiedlichen Voreinstellwerten für die Fokusregelung mit Hilfe des CCD-Meßsystems 14 und des Kontrastprogramms das kontrastreichste Bild ausgewählt. Der zu diesem Bild gehörige Voreinstellwert für die Fokusregelung bildet den Grundeinstellwert oder Grundoffset OFFS_G.

Für die Fokussierung bei der Inspektion ist es von Bedeutung, ob die zu inspizierende Oberfläche unstrukturiert oder strukturiert ist.

Eine unstrukturierte Oberfläche ist im wesentlichen frei von Reflexionsgradschwankungen. Strukturtopologische Einflüsse auf die Fokuseinsteltung sind unbedeutend.

Einer Anpassung der Fokussierung an den Halbleiterwafer und insbesondere an Fehler auf dessen unstrukturierter Oberfläche dient eine Arbeitsweise, nach der unter Zugrundelegung des Grundeinstellwertes OFFS_G von einem ausgewählten Fehler eine Bildserie mit verschiedenen Voreinstellwerten für die Fokusregelung aufgenommen wird. Die Ermittlung des Voreinstellwertes, bei dem die Pseudofehlerrate gemäß der Aufgabenstellung minimiert ist, erfolgt durch Regelanwendung in Form der zweiten Regel.

Für die Inspektion strukturierter Oberflächen ist es erforderlich, daß das optische Fokusmeßsystem an die Waferdicke und den Bildinhalt des Halbleiterwafers angepaßt wird.

Das erfolgt anhand eines Referenzgebietes, das einem Teilgebiet auf dem Halbleiterwafer entspricht und auch ein Chip oder der Teil eines Chips sein kann.

Die Größe des Referenzgebietes ist dadurch bestimmt, daß auch in den Randbereichen mit der gefundenen Anpassung des optischen Fokusmeßsystems in Form des Voreinstellwertes der Fokusregelung keine Defokussierung auftritt.

Zur Auswahl des Referenzgebietes dient ein Verfahren, mit dem an den Orten sich wiederholender Höhenmarken (Marken, die das Höhenprofil wiedergeben) unter Zugrundelegung des Grundeinstellwertes Offset_G aus Serien von Bildern, von denen jedes mit einem anderen Voreinstellwert der Fokusregelung aufgenommen wird, durch Bildverarbeitung für jeden Ort das kontrastreichste Bild ermittelt wird.

Jeweils dem kontrastreichsten Bild zugeordnete Werte des Abstandes der Trägerebene E-E zur Bezugsebene B-B ergeben ein Höhenprofil des Halbleiterwafers. Als Referenzgebiet ist ein ebenes Gebiet geeignet, für das das Höhenprofil den geringsten Höhengradienten besitzt.

Innerhalb des Referenzgebietes wird an mindestens einer ausgewählten Position unter Zugrundelegung des Grundeinstellwertes OFFS_G wiederum eine Bildserie mit verschiedenen Voreinstellwerten der Fokusregelung aufgenommen. Der dem jeweiligen, durch Bildverarbeitung ermittelten, kontrastreichsten Bild zugeordnete Voreinstellwert der Fokusregelung wird als Referenzeinstellwert OFPS_ref xi,yi Bezugsbasis für die Inspektion und mit seinen Ortskoordinaten (i für die x-Richtung, j für die y-Richtung) gespeichert.

Entsprechend der Anzahl der ausgewählten Positionen ist das Gebiet mit Voreinstellwerten des optischen Fokusmeßsystems angelernt.

Die Einrichtung ist nunmehr in der Lage, mit dem Referenzgebiet vergleichbare Gebiete mit dem Ziel der Fehlererkennung bildfeldweise zu inspizieren.

Im regionalen Einstellwert ist die Wafertopologie des Gebietes erfaßt. Strukturbedingte Reflexionsgradschwankungen beeinflussen im allgemeinen die Fokussierung nicht in störender Weise aufgrund ihres Wiederholcharakters.

Sofern sich die Reflexionsverhältnisse in verschiedenen Gebieten trotz gleichen Bildinhalts unterscheiden, ist es selbstverständlich möglich, diese in der bereits beschriebenen Weise über die Aufnahme einer Bildserie auszugleichen.

Auch für die Defektklassifikation ist es erforderlich, das optische Fokusmeßsystem an die Waferdicke und den Bildinhalt des Halbleiterwafers unter Verwendung eines Referenzgebietes anzupassen. Die Auswahl des Referenzgebietes erfolgt in gleicher Weise wie bei der Inspektion. Die wesentlichen Auswahlkriterien sind deren Ebenheit und die Freiheit von Fehlern.

Bei der Defektklassifikation ist es für jeden Wafer weiterhin erforderlich, Reflexionsgradschwankungen auf seiner Oberfläche auszugleichen.

Zu diesem Zweck wird an mindestens einem Ort des Referenzgebietes von einer Höhenmarke unter Verwendung des Grundeinstellwertes OFFS_G eine Bildserie mit unterschiedlichen Voreinstellwerten der Fokusregelung aufgenommen und durch Bildverarbeitung das kontrastreichste Bild ausgewählt. Der zugehörige Einstellwert der Fokussierung OFFS_ref und der Abstand FP_ref der Trägerebene E-E zur Bezugsebene B-B werden als Voreinstellwerte für die Defektklassifikation gespeichert.

Defektklassifikation heißt Vergleich des Bildinhaltes mit einem zu klassifizierenden Fehler mit dem Bildinhalt eines Referenzbildes.

Mit Hilfe der Einstellung des Abstandes FP_ref der Trägerebene E-E zur Bezugsebene B-B wird der interessierende Bildinhalt in dem Referenzgebiet als Referenzbild aufgenommen und gespeichert.

Mit dem Voreinstellwert der Fokussierung OFFS_ref wird vom Fehlerbild eine Bildserie mit unterschiedlichen Einstellungen des optischen Fokus aufgenommen und durch Bildverarbeitung das kontrastreichste Bild ausgewählt. Der diesem Bild zugeordnete Abstand der Trägerebene E-E zur Bezugsebene B-B bildet den Einstellwert zur Aufnahme des Fehlerbildes, das zur Klassifikation mit dem Referenzbild verglichen wird.

In gleicher Weise wird mit weiteren Fehlerbildern verfahren.

## Patentansprüche

1. Verfahren zur Fokussierung bei der Abbildung von unstrukturierten und strukturierten Oberflächen von scheibenförmigen Objekten für die Anwendungen der Defekterkennung und Defektklassifikation durch geregelte Verstellung des meßbaren Abstandes einer zur Auflage für die Objekte dienenden Trägerebene zu einer Bezugsebene, **dadurch gekennzeichnet, daß**
der durch geregelte Verstellung hergestellte Abstand mit Hilfe eines der Regelung überlagerten, ungeregelten, mindestens für ein Teilgebiet der Oberfläche anzuwendenden und vorher für das Teilgebiet angelernten Voreinstellwertes korrigiert ist.

2. Verfahren nach Anspruch 1, **dadurch gekennzeichnet, daß** die Ermittlung des anzuwendenden Voreinstellwertes anhand einer Bildfolge an mindestens einer Position in einem, im wesentlichen ebenen Referenzgebiet der Oberfläche erfolgt, wobei zur Aufnahme der Bildfolge unterschiedliche Voreinstellwerte der Fokusregelung dienen und die Qualität des jeweiligen Fokuszustandes mittels einer Bildverarbeitung nach mindestens einer Regel bewertet und daraus der anzuwendende Voreinstellwert ermittelt wird.

3. Verfahren nach Anspruch 2, **dadurch gekennzeichnet, daß** die Regel darin besteht, daß der zum kontrastreichsten Bild gehörige Voreinstellwert zur Einstellung des korrigierten Abstandes dient.

4. Verfahren nach Anspruch 2, **dadurch gekennzeichnet, daß** die Regel darin besteht, daß der zum Bild mit minimaler Anzahl von Fehlern, die von der Bildverarbeitung auf der Objektoberfläche festgestellt werden, gehörige Voreinstellwert zur Einstellung des korrigierten Abstandes dient.

5. Verfahren nach Anspruch 2, **dadurch gekennzeichnet, daß** die Regel darin besteht, daß der zum Bild mit minimaler Anzahl von Fehlerpixeln der von der Bildverarbeitung auf der Objektoberfläche festgestellten Fehler im Verhältnis zur Gesamtfehlerfläche gehörige Voreinstellwert zur Einstellung des korrigierten Abstandes dient.

6. Verfahren nach Anspruch 2, **dadurch gekennzeichnet, daß** die Regel darin besteht, daß der zum Bild mit minimaler Anzahl von Pseudofehlerpixeln der von der Bildverarbeitung auf der Objektoberfläche festgestellten Fehler gehörige Voreinstellwert zur Einstellung des korrigierten Abstandes dient.

7. Verfahren nach einem der Ansprüche 3 bis 6, **dadurch gekennzeichnet,**
**daß** eine Auswahl des Referenzgebietes nach dem geringsten Gradienten des Höhenprofils der Oberfläche von Halbleiterwafem als scheibenförmigen Objekten erfolgt, zu dessen Bestimmung die Werte des Abstandes der Trägerebene E-E zur Bezugsebene B-B an Orten sich wiederholender Höhenmarken für die zugehörigen Voreinstellwerte der Fokusregelung unter Anwendung mindestens einer Regel zu ermitteln sind.

8. Verfahren nach Anspruch 7, **dadurch gekennzeichnet,**
**daß** bei einer Inspektion der Objektoberfläche, bei der eine Fehlersuche schrittweise nach Bildfeldem erfolgt, zur Fokussierung der für die jeweilige Bildfeldposition ermittelte Voreinstellwert der Fokusregelung dient.

9. Verfahren nach Anspruch 7, **dadurch gekennzeichnet,**
**daß** zur Defektklassifikation, bei der ein Bild, das einen zu klassifizierenden Fehler enthält mit einem Referenzbild verglichen wird, die Aufnahme des Referenzbildes mit einem für die Referenzbildposition ermittelten korrigierten Abstand der Trägerebene E-E zur Bezugsebene B-B erfolgt,
und zur Aufnahme des Bildes mit dem zu klassifizierenden Fehler der Wert des Abstandes der Trägerebene E-E zur Bezugsebene B-B für die Fokuseinstellung verwendet wird, der zum kontrastreichsten Bild einer Serie von Bildern mit dem zu klassifizierenden Fehler gehört, wobei zur Erzeugung der Bilderserie der der Bildposition zugehörige Voreinstellwert der Fokusregelung in Stufen variiert wird.

## Claims

1. Method for focusing during imaging of unpatterned and patterned surfaces of disc-shaped objects for the applications of detecting defects and classifying defects by means of controlled adjustment of the measurable spacing of a carrier plane, serving as the support for the objects, from a reference plane, **characterized in that** the spacing produced by controlled adjustment is corrected with the aid of a preset value which is superimposed on the control, is uncontrolled, is to be applied at least to a subarea of the surface, and is learned in advance for the subarea.

2. Method according to Claim 1, **characterized in that** the preset value to be applied is ascertained with the aid of an image sequence at at least one position in a substantially flat reference area on the surface, different preset values of the focus control serving the recording of the image sequence, and the quality of the respective focal state being evaluated by means of image processing using at least one rule, and the preset value to be applied being determined therefrom.

3. Method according to Claim 2, **characterized in that** the rule consists **in that** the preset value belonging to the most contrasty image serves for setting the corrected spacing.

4. Method according to Claim 2, **characterized in that** the rule consists **in that** the preset value belonging to the image with the minimum number of errors, which are detected by the image processing on the object surface, serves for setting the corrected spacing.

5. Method according to Claim 2, **characterized in that** the rule consists **in that** the preset value belonging to the image with the minimum number of error pixels of the errors detected by the image processing on the object surface proportioned to the total error surface serves for setting the corrected spacing.

6. Method according to Claim 2, **characterized in that** the rule consists **in that** the preset value belonging to the image with the minimum number of pseudoerror pixels of the errors detected by the image processing on the object surface serves for setting the corrected spacing.

7. Method according to one of Claims 3 to 6, **characterized in that** a selection of the reference area is performed in terms of the shallowest gradient of the height profile of the surface of semiconductor wafers as disc-shaped objects, for the determination of which at least one rule is to be applied in order to ascertain the values of the spacing of the carrier plane E-E from the reference plane B-B at locations of repeating height marks for the associated preset values of the focus control.

8. Method according to Claim 7, **characterized in that** during an inspection of the object surface, in which a search for errors is performed stepwise in terms of image fields, the preset value of the focus control ascertained for the respective image field position serves for focusing.

9. Method according to Claim 7, **characterized in that** for the purpose of defect classification, in which an image which contains an error to the classified is compared with a reference image, the reference image is recorded with the aid of a corrected spacing, ascertained for the reference image position, of the carrier plane E-E from the reference plane B-B,
and in order to record the image with the error to be classified use is made for focusing purposes of that value of the spacing of the carrier plane E-E from the reference plane B-B which belongs to the most contrasty image of a series of images with the error to be classified, the preset value, belonging to the image position, of the focus control being varied in stages in order to generate the image series.

## Revendications

1. Procédé de focalisation lors de la représentation de surfaces non structurées et structurées d'objets sous forme de plaques pour les applications de détection des défauts et de classification des défauts par positionnement régulé de l'écart mesurable entre un plan porteur servant à déposer les objets et un plan de référence, **caractérisé en ce que** l'écart établi par le positionnement régulé est corrigé à l'aide d'une valeur de préréglage superposée à la régulation, non régulée, à utiliser au moins pour une zone partielle de la surface et préalablement apprise pour la zone partielle.

2. Procédé selon la revendication 1, **caractérisé en ce que** la détermination de la valeur de préréglage à utiliser est effectuée à l'aide d'une série d'images en au moins une position, dans une zone de référence pour l'essentiel plane de la surface, différentes valeurs de préréglage pour la régulation de la mise au point servant à l'enregistrement de la série d'images et la qualité de l'état de mise au point correspondant étant évaluée au moyen d'un traitement d'image d'après au moins une règle et la valeur de préréglage à utiliser étant déterminée à partir de cela.

3. Procédé selon la revendication 2, **caractérisé en ce que** la règle consiste à utiliser pour le réglage de l'écart corrigé la valeur de préréglage faisant partie de l'image la plus fortement contrastée.

4. Procédé selon la revendication 2, **caractérisé en ce que** la règle consiste à utiliser pour le réglage de l'écart corrigé la valeur de préréglage faisant partie de l'image comportant le plus petit nombre d'erreurs, lesquelles sont déterminées par le traitement d'image sur la surface de l'objet.

5. Procédé selon la revendication 2, **caractérisé en ce que** la règle consiste à utiliser pour le réglage de l'écart corrigé la valeur de préréglage faisant partie de l'image comportant le plus petit nombre de pixels de défaut associés au défaut déterminé par le traitement d'image sur la surface de l'objet par rapport à la surface totale du défaut.

6. Procédé selon la revendication 2, **caractérisé en ce que** la règle consiste à utiliser pour le réglage de l'écart corrigé la valeur de préréglage faisant partie de l'image comportant le plus petit nombre de pixels de pseudo-défaut associés au défaut déterminé par le traitement d'image sur la surface de l'objet.

7. Procédé selon l'une des revendications 3 à 6,
**caractérisé en ce qu'**une sélection de la zone de référence est effectuée d'après les plus petits gradients du profil de hauteur de la surface de galettes en semiconducteur faisant office d'objets sous forme de plaques, les valeurs de l'écart entre le plan porteur E-E et le plan de référence B-B aux endroits où se répètent les repères de hauteur pour les valeurs de préréglage associées pour la régulation de la mise au point devant être déterminées en utilisant au moins une règle.

8. Procédé selon la revendication 7, **caractérisé en ce que** lors d'une inspection de la surface de l'objet au cours de laquelle a lieu une recherche pas à pas de champs d'image, la régulation de la mise au point sert à la focalisation de la valeur de préréglage déterminée pour la position correspondante du champ de l'image.

9. Procédé selon la revendication 7, **caractérisé en ce que** pour la classification du défaut, opération au cours de laquelle une image qui contient un défaut à classifier est comparée avec une image de référence, l'enregistrement de l'image de référence est effectué avec un écart corrigé entre le plan porteur E-E et le plan de référence B-B déterminé pour la position de l'image de référence,
et pour l'enregistrement de l'image contenant le défaut à classifier, on utilise pour le réglage de la mise au point la valeur de l'écart entre le plan porteur E-E et le plan de référence B-B qui fait partie de l'image la plus fortement contrastée parmi une série d'images contenant le défaut à classifier, la valeur de préréglage de la régulation de la mise au point associée à la position de l'image étant modifiée par paliers pour produire la série d'images.
